# EUROPÄISCHE PATENTSCHRIFT

(11) **EP 4 275 468 B1**
(45) Veröffentlichungstag und Bekanntmachung des Hinweises auf die Patenterteilung: **20.11.2024**
(21) Anmeldenummer: 23155831.3
(22) Anmeldetag: 09.02.2023
(51) Int. Cl.: A01B 69/04, G05D 1/00

(54) **VERFAHREN ZUM ÜBERWACHEN EINES BETRIEBS EINER AUTONOMEN LANDWIRTSCHAFTLICHEN ARBEITSMASCHINE**
METHOD FOR MONITORING AN OPERATION OF AN AUTONOMOUS AGRICULTURAL WORKING MACHINE
PROCÉDÉ DE SURVEILLANCE DU FONCTIONNEMENT D'UNE MACHINE DE TRAVAIL AGRICOLE AUTONOME

(30) Priorität: 27.04.2022 DE 102022110130
(43) Veröffentlichungstag der Anmeldung: 15.11.2023
(73) Patentinhaber: CLAAS Selbstfahrende Erntemaschinen GmbH, 33428 Harsewinkel (DE)
(72) Erfinder: Mähler, Reinhold, 33378 Rheda-Wiedenbrück (DE); Ehlert, Christian, 33719 Bielefeld (DE); Bormann, Bastian, 33334 Gütersloh (DE); Baumgarten, Joachim, 48361 Beelen (DE); Neitemeier, Dennis, 59510 Lippetal (DE); Witte, Johann, 58730 Fröndenberg (DE); Redenius, Jannik, 32361 Pr. Oldendorf (DE); Bohl, Arne, 33330 Gütersloh (DE); Nacke, Eberhard, 33332 Gütersloh (DE); Apke, Christoph, 33659 Bielefeld (DE); Thiesmann, Waldemar, 49080 Osnabrück (DE); Schröder, Axel, 33332 Gütersloh (DE); Monkenbusch, Robin, 33378 Rheda-Wiedenbrück (DE); Korthals, Timo, 33818 Leopoldshöhe (DE)
(74) Vertreter: CLAAS Gruppe

(56) Entgegenhaltungen:
- EP-A1- 3 783 529
- EP-B1- 0 740 896
- US-A1- 2007 005 202

## Beschreibung

Die vorliegende Anmeldung betrifft ein Verfahren zum Überwachen eines Betriebs mindestens einer autonomen landwirtschaftlichen Arbeitsmaschine gemäß dem Oberbegriff des unabhängigen Patentanspruchs 1.

In der modernen Landwirtschaft sind vermehrt Bestrebungen dahingehend zu erkennen Arbeitseinsätze autonom durchzuführen, um die Produktivität und Wirtschaftlichkeit der Prozesse zu erhöhen. Hierfür kommen sogenannte autonome landwirtschaftliche Arbeitsmaschinen zum Einsatz, die sich dadurch auszeichnen, dass kein Bediener in einer Kabine zur Steuerung derselben vorhanden ist. Demnach steht bei autonomen landwirtschaftlichen Arbeitsmaschinen kein Bediener zur Verfügung, der einen durchzuführenden landwirtschaftlichen Arbeitsablauf mit einer Abfolge von verschiedenen Arbeitsschritten kennt und einzelne Steuerfunktionen während des Betriebs der Arbeitsmaschine auf einer landwirtschaftlichen Fläche ausführen kann. Derartige autonome landwirtschaftliche Arbeitsmaschinen werden daher auch als unbemannte landwirtschaftliche Arbeitsmaschinen bezeichnet.

Aus der WO 2015/173073 A1 ist beispielsweise ein Verfahren zum Ernten von Erntegut mittels bemannten landwirtschaftlichen Arbeitsmaschinen und unbemannten landwirtschaftlichen Arbeitsmaschinen, also autonomen landwirtschaftlichen Arbeitsmaschine, bekannt. Der Betrieb und die Wegstrecke, die von einer unbemannten landwirtschaftlichen Arbeitsmaschine während ihres Betriebs auf einer landwirtschaftlichen Fläche zurückgelegt wird, werden hier durch den Bediener einer bemannten landwirtschaftlichen Arbeitsmaschine gesteuert. Dieser befindet sich hierfür durchgehend während des Betriebs der autonomen landwirtschaftlichen Arbeitsmaschinen in unmittelbarer Nähe zu diesen. Der Bediener der bemannten landwirtschaftlichen Arbeitsmaschine ist demnach dazu in der Lage, den Betrieb der unbemannten landwirtschaftlichen Arbeitsmaschinen visuell zu überwachen und die unbemannten landwirtschaftlichen Arbeitsmaschinen entsprechend dem geplanten Einsatz über eine drahtlose Fernsteuerung zu steuern.

Nachteilig bei einem derartigen Verfahren ist, dass der Betrieb der autonomen landwirtschaftlichen Arbeitsmaschine an die Gegenwart eines Bedieners einer bemannten landwirtschaftlichen Arbeitsmaschine zwingend geknüpft ist, der sich stets in unmittelbarer Nähe zu der unbemannten landwirtschaftlichen Arbeitsmaschine befindet, um diese fernsteuern zu können. Zwar werden demnach Arbeitsschritte dem Prinzip nach autonom von den unbemannten Arbeitsmaschinen durchgeführt, jedoch ist stets die Nähe einer Person zur Durchführung der Arbeitsschritte durch die autonome landwirtschaftliche Arbeitsmaschine erforderlich.

Ein Verfahren zum Überwachen eines Betriebs mindestens einer autonomen landwirtschaftlichen Arbeitsmaschine ist aus der EP 3 783 529 A1 bekannt.

Ausgehend von dem vorstehend genannten Stand der Technik ist es demnach die Aufgabe der vorliegenden Erfindung, ein Verfahren anzugeben, das eine geplante und autonome Durchführung eines Arbeitsschrittes durch eine autonome landwirtschaftliche Arbeitsmaschine erlaubt und zwar ohne, dass sich eine Person in der Nähe der autonomen landwirtschaftlichen Arbeitsmaschine aufhalten muss, um den Betrieb der autonomen landwirtschaftlichen Arbeitsmaschine zu überwachen und diese während der Durchführung zu steuern.

Diese Aufgabe wird erfindungsgemäß durch die Merkmale des unabhängigen Patentanspruchs 1 gelöst, wobei vorteilhafte Weiterbildungen des erfindungsgemäßen Verfahrens Gegenstand der entsprechenden abhängigen Patentansprüche 2 bis 15 sind.

Demnach betrifft die vorliegende Erfindung ein Verfahren zum Überwachen eines Betriebs mindestens einer autonomen landwirtschaftlichen Arbeitsmaschine. Mittels einer Sensoreinrichtung werden Daten während des Betriebs der autonomen landwirtschaftlichen Arbeitsmaschine ermittelt, die Betriebsparameter und Umgebungsparameter der autonomen landwirtschaftlichen Arbeitsmaschine repräsentieren. Basierend auf den ermittelten Daten wird mittels einer Steuereinrichtung eine Unregelmäßigkeit während des Betriebs der autonomen landwirtschaftlichen Arbeitsmaschine festgestellt, wobei die Sensoreinrichtung mit der Steuereinrichtung zur Übertragung von Daten kommuniziert und die autonome landwirtschaftliche Arbeitsmaschine bei dem Feststellen einer Unregelmäßigkeit in einen sicheren Betriebszustand überführt wird, in dem der Betrieb der autonomen landwirtschaftlichen Arbeitsmaschine unterbrochen ist. Das Verfahren ist dadurch gekennzeichnet, dass die ermittelten Daten an eine Datenbank übermittelt werden und zwar sobald die Unregelmäßigkeit festgestellt wird. Die Datenbank kommuniziert mit der Sensoreinrichtung und/oder der Steuereinrichtung zur Übertragung von Daten. Die von der Sensoreinrichtung ermittelten Daten werden in der Datenbank hinterlegt. Die Unregelmäßigkeit wird mittels einer Verarbeitungseinrichtung durch ein Verarbeiten der ermittelten Daten in einer Analyseroutine identifiziert, wobei die Verarbeitungseinrichtung mit der Datenbank zur Übertragung von Daten kommuniziert. Weiter wird mittels der Verarbeitungseinrichtung eine Anweisung zum Überführen der autonomen landwirtschaftlichen Arbeitsmaschine aus dem sicheren Betriebszustand in einen normalen Betriebszustand erzeugt und zwar in Abhängigkeit der identifizierten Unregelmäßigkeit. Der normale Betriebszustand ist ein Zustand, in dem der Betrieb der autonomen landwirtschaftlichen Arbeitsmaschine fortgesetzt wird. Darüber hinaus wird mittels der Verarbeitungseinrichtung die Anweisung zum Überführen der autonomen landwirtschaftlichen Arbeitsmaschine aus dem sicheren Betriebszustand in den normalen Betriebszustand ausgeführt.

Durch das erfindungsgemäße Verfahren wird es möglich den Betrieb einer autonomen landwirtschaftlichen Arbeitsmaschine kontinuierlich zu überwachen, um mögliche Unregelmäßigkeiten, die während des Betriebs der autonomen landwirtschaftlichen Arbeitsmaschine auftreten und zu einer betriebskritischen Situation führen könnten, frühzeitig zu identifizieren und entsprechende Maßnahmen zur Umgehung der Unregelmäßigkeit auszulösen.

Alle Verfahrensschritte einschließlich des Ausführens der Anweisung zum Überführen der autonomen landwirtschaftlichen Arbeitsmaschine aus dem sicheren Betriebszustand in den normalen Betriebszustand laufen automatisch ab, d.h. ohne ein Eingreifen einer Person, die sich auf oder in der Nähe der autonomen landwirtschaftlichen Arbeitsmaschine befindet. Mit anderen Worten, es wird nicht durchgehend eine Person am Ort des Geschehens benötigt, die den Betrieb der autonomen landwirtschaftlichen Arbeitsmaschine überwacht und Einfluss auf die autonome landwirtschaftliche Arbeitsmaschine nimmt.

Ganz im Gegenteil, mittels der Sensoreinrichtung werden fortwährend, zumindest jedoch zu gewissen Zeitpunkten einer Vielzahl an Zeitpunkten, während des Betriebs der autonomen landwirtschaftlichen Arbeitsmaschine Sensordaten generiert, die Betriebs- und Umgebungsparametern der autonomen landwirtschaftlichen Arbeitsmaschine repräsentieren. Die von der Sensoreinrichtung ermittelten Daten werden von der Steuereinrichtung zum Feststellen einer Unregelmäßig herangezogen, die zu einer betriebskritischen Situation führen könnte. Tritt eine solche Unregelmäßigkeit im Betrieb der autonomen landwirtschaftlichen Arbeitsmaschine auf, so wird unmittelbar der Betrieb der autonomen landwirtschaftlichen Arbeitsmaschine unterbrochen, um eine betriebskritische Situation der autonomen landwirtschaftlichen Arbeitsmaschine zu verhindern. Zeitgleich werden die von der Sensoreinrichtung zum Zeitpunkt des Auftretens der Unregelmäßigkeit ermittelten Daten an die Datenbank übermittelt und mittels der Verarbeitungseinrichtung wird die festgestellte Unregelmäßigkeit basierend auf diesen Daten identifiziert.

Hierbei kommt eine Analyseroutine zur Anwendung, die es erlaubt aus den ermittelten Daten die aufgetretene Unregelmäßigkeit zu identifizieren. Mit anderen Worten, durch die Verarbeitung der ermittelten Daten in der Analyseroutine durch die Verarbeitungseinrichtung wird exakt bestimmt, um welche Art von Unregelmäßigkeit es sich handelt. In Abhängigkeit der identifizierten Unregelmäßigkeit wird dann von der Verarbeitungseinrichtung eine Anweisung erzeugt und ausgeführt, die es ermöglicht die autonome landwirtschaftliche Arbeitsmaschine wieder in Betrieb zu nehmen. Der von der autonomen landwirtschaftlichen Arbeitsmaschine ausgeführte Arbeitsschritt kann dann weiter fortgesetzt werden.

In der Analyseroutine, die der Identifizierung der Unregelmäßigkeit dient, wird ein Analysealgorithmus angewendet, der aus den ermittelten Daten die aufgetretene Unregelmäßigkeit, also die Art der Unregelmäßigkeit, bestimmt. Insbesondere ist der Analysealgorithmus ein lernfähiger Analysealgorithmus, also ein Analysealgorithmus, der auf einer künstlichen Intelligenz, vorzugsweise einem künstlichen neuronalen Netz, basiert. Der lernfähige Analysealgorithmus wird vor der Durchführung einer ersten Identifizierung mittels eines Initialdatensatzes, der mittels manueller Annotation vorgenommene Zuordnungen von Daten betreffend verschiedene Betriebsparameter und Umgebungsparameter von autonomen landwirtschaftlichen Arbeitsmaschinen und Unregelmäßigkeiten definiert, trainiert. Die während der Durchführung des erfindungsgemäßen Verfahrens ermittelten Daten und identifizierten Unregelmäßigkeiten können zum weiteren Trainieren des Analysealgorithmus verwendet werden.

Das erfindungsgemäße Verfahren erlaubt demnach eine sichere und zuverlässige Durchführung von Arbeitsschritten durch autonome landwirtschaftliche Arbeitsmaschinen, wobei alle Vorteile, die eine autonome Durchführung der Arbeitseinsätze mit sich bringt in vollem Maße ausgenutzt werden können. Kapazitäten einer Person, die im Stand der Technik zur Steuerung der unbemannten landwirtschaftlichen Arbeitsmaschinen nötig sind, können somit für andere landwirtschaftliche Arbeitsaufgaben genutzt werden.

Gemäß einer vorteilhaften Weiterbildung der Erfindung ist vorgesehen, dass die Anweisung eine Vorschrift umfasst, die ein Ansteuern der autonomen landwirtschaftlichen Arbeitsmaschine durch die Verarbeitungseinrichtung zur Fortsetzung des Betriebs definiert.

Ergänzend hierzu ist gemäß einer vorteilhaften Weiterbildung der Erfindung vorgesehen, dass die Anweisung eine Vorschrift umfasst, die ein Übermitteln einer geänderten Route für die autonome landwirtschaftliche Arbeitsmaschine definiert.

Alternativ zur Vorschrift, die ein Ansteuern der autonomen landwirtschaftlichen Arbeitsmaschine durch die Verarbeitungseinrichtung zur Fortsetzung des Betriebs definiert, ist gemäß einer vorteilhaften Weiterbildung der Erfindung vorgesehen, dass die Anweisung eine Vorschrift umfasst, die ein Beauftragen einer Person zum Überführen der autonomen landwirtschaftlichen Arbeitsmaschine von dem sicheren Betriebszustand in den normalen Betriebszustand umfasst.

Weiterhin ist gemäß einer vorteilhaften Weiterbildung der Erfindung vorgesehen, dass die Anweisung eine Vorschrift umfasst, die ein Beauftragen von mindestens einer weiteren autonomen landwirtschaftlichen Arbeitsmaschine und/oder mindestens einer bemannten landwirtschaftlichen Arbeitsmaschine zur Unterstützung der autonomen landwirtschaftlichen Arbeitsmaschine, in deren Betrieb die Unregelmäßigkeit aufgetreten ist, definiert.

Dadurch, dass die Anweisung zum Überführen der autonomen landwirtschaftlichen Arbeitsmaschine aus dem sicheren Betriebszustand in den normalen Betriebszustand eine Vielzahl an Vorschriften umfassen kann, die bei einem Ausführen der Anweisung durch die Verarbeitungseinrichtung veranlasst werden, kann auf verschiedene Unregelmäßigkeiten im Betrieb der autonomen landwirtschaftlichen Arbeitsmaschine ideal und angepasst reagiert werden. Nur dann, wenn die Unregelmäßigkeit der Art ist, dass sie durch eine direkte Ansteuerung der autonomen landwirtschaftlichen Arbeitsmaschine nicht umgangen werden kann, wird eine Person beauftragt, die sich zu der autonomen landwirtschaftlichen Arbeitsmaschine begibt, um diese von dem sicheren Betriebszustand in den normalen Betriebszustand zu überführen.

Gemäß einer vorteilhaften Weiterbildung der Erfindung ist vorgesehen, dass ein defektes Arbeitsaggregat der autonomen landwirtschaftlichen Arbeitsmaschine, ein defektes an die autonome landwirtschaftliche Arbeitsmaschine adaptiertes Arbeitsaggregat und/oder ein Hindernis auf einer Route der autonomen landwirtschaftlichen Arbeitsmaschine als Unregelmäßigkeit identifiziert wird.

Insbesondere ist vorgesehen, dass als Hindernis in der Route der autonomen landwirtschaftlichen Arbeitsmaschine ein statisches Hindernis und/oder ein sich bewegendes Hindernis identifiziert wird, insbesondere ein Objekt, ein Fahrzeug und/oder ein Lebewesen.

Die Verarbeitungseinrichtung ist demnach dazu in der Lage, die von der Sensoreinrichtung ermittelten Daten derart zu verarbeiten, dass eine hochpräzise Bestimmung bzw. Identifizierung der im Betrieb der autonomen landwirtschaftlichen Arbeitsmaschine aufgetretenen Unregelmäßigkeit vorgenommen werden kann. Diese Bestimmung ist die Grundlage dafür, dass eine Anweisung zum Überführen der autonomen landwirtschaftlichen Arbeitsmaschine vom sicheren in den normalen Betriebszustand erzeugt wird, die eine ideale und angepasste Reaktion auf die aufgetretene Unregelmäßigkeit erlaubt.

Gemäß einer vorteilhaften Weiterbildung der Erfindung ist vorgesehen, dass die Datenbank als zentrale Datenbank oder als dezentrale Datenbank, vorzugsweise als Blockchain-Datenbank, ausgebildet ist.

Weiter vorzugsweise ist vorgesehen, dass die Datenbank eine cloudbasierte Datenbank ist.

Gemäß einer vorteilhaften Weiterbildung der Erfindung ist vorgesehen, dass die Sensoreinrichtung eine Vielzahl an Sensoren umfasst, die an der autonomen landwirtschaftlichen Arbeitsmaschine, an einem an die autonome landwirtschaftliche Arbeitsmaschine adaptierten Arbeitsaggregat und/oder an einer sich in unmittelbarer Umgebung zur autonomen landwirtschaftlichen Arbeitsmaschine befindenden und mit dieser zur Übertragung von Daten kommunizierenden Einrichtung, insbesondere einer Drohne, angeordnet sind.

Als Sensoren kommen alle im Kontext der Landwirtschaft bekannten berührungslos und berührend arbeitenden Sensoren, die der Ermittlung von Betriebsparametern und Umgebungsparametern dienen, in Frage.

Die Vielzahl an Sensoren erlaubt es fortwährend, zumindest jedoch zu gewissen Zeitpunkten einer Vielzahl an Zeitpunkten, während des Betriebs der autonomen landwirtschaftlichen Arbeitsmaschine eine große Datenmenge betreffend Betriebsparameter und Umgebungsparameter der autonomen landwirtschaftlichen Arbeitsmaschine zu ermitteln, so dass eine ausreichende Datengrundlage als Eingangsgröße für die Identifizierung der Unregelmä-ßigkeit durch die Verarbeitungseinrichtung geschaffen wird. Hierdurch kann die Identifizierung der aufgetretenen Unregelmäßigkeit besonders präzise vorgenommen werden, wodurch eine exakt auf die vorliegende Unregelmäßigkeit angepasste Anweisung zur Überführung der autonomen landwirtschaftlichen Arbeitsmaschine von dem sicheren Betriebszustand in den normalen Betriebszustand erzeugt werden kann.

Gemäß einer vorteilhaften Weiterbildung der Erfindung ist vorgesehen, dass die Steuereinrichtung mindestens eine Steuereinheit umfasst, die in der autonomen landwirtschaftlichen Arbeitsmaschine, in einem an die autonome landwirtschaftliche Arbeitsmaschine adaptierten Arbeitsaggregat und/oder in einer sich in unmittelbarer Umgebung zu autonomen landwirtschaftlichen Arbeitsmaschine befindenden und mit dieser zur Übertragung von Daten kommunizierenden Einrichtung, insbesondere einer Drohne, angeordnet ist.

Hierdurch kann das Feststellen der Unregelmäßigkeit vor Ort im Wesentlichen in Echtzeit erfolgen, also unmittelbar während des Betriebs der autonomen landwirtschaftlichen Arbeitsmaschine auf einer landwirtschaftlichen Fläche, und die autonome landwirtschaftliche Arbeitsmaschine umgehend in den sicheren Betriebszustand zur Vermeidung einer betriebskritischen Situation überführt werden. Die Daten zumindest zur Feststellung einer Unregelmäßigkeit werden demnach nicht erst an eine externe Verarbeitungseinrichtung zur Verarbeitung derselben übermittelt, was zu einer erhöhten Reaktionszeit führen würde.

Gemäß einer vordersten Weiterbildung der Erfindung ist vorgesehen, dass das Identifizieren der Unregelmäßigkeit mittels der Verarbeitungseinrichtung unter Berücksichtigung von Referenzdaten erfolgt.

Vorzugsweise sind die Referenzdaten Geodaten, insbesondere Daten zur Lokalisierung der autonomen landwirtschaftlichen Arbeitsmaschine während des Betriebs, Wetterdaten und/oder ergonomische Daten, insbesondere Bodendaten, Bestandsdaten, Ertragsdaten und/oder Flächendaten. Die Referenzdaten sind in der Datenbank und/oder in einer von der Datenbank unabhängigen Referenzdatenbank hinterlegt und die Verarbeitungseinrichtung kommuniziert mit der Referenzdatenbank zur Übertragung von Daten.

Die Verwendung von Referenzdaten als weitere Eingangsgröße in der Analyseroutine sorgt für eine weitere Erhöhung der Genauigkeit bei der Identifizierung der im Betrieb der autonomen landwirtschaftlichen Arbeitsmaschine aufgetretenen Unregelmäßigkeit.

Gemäß einer vorteilhaften Weiterbildung der Erfindung ist vorgesehen, dass mindestens zwei autonome landwirtschaftliche Arbeitsmaschinen, vorzugsweise eine Vielzahl an autonomen landwirtschaftlichen Arbeitsmaschinen, überwacht wird, wobei das Identifizieren von Unregelmäßigkeiten mittels der Verarbeitungseinrichtung ein Klassifizieren derselben umfasst, wobei das Ausführen von Anweisungen zum Überführen der autonomen landwirtschaftlichen Arbeitsmaschine aus dem sicheren Betriebszustand in den normalen Betriebszustand einer Priorisierung unterliegt, die auf der Klassifizierung der Unregelmäßigkeiten basiert.

Der Klassifizierung können insbesondere Aspekte, wie die Schwere der Unregelmä-ßigkeit, etwaige durch die Störung entstehende Kosten durch einen Betriebsausfall der autonomen landwirtschaftlichen Arbeitsmaschine, Witterungsbedingungen oder dergleichen, zugrunde gelegt werden.

Das Klassifizieren der identifizierten Unregelmäßigkeiten und das priorisierte Ausführen der Anweisungen durch die Verarbeitungseinrichtung bei einem Vorliegen einer Vielzahl an Unregelmäßigkeiten bei einer Vielzahl an autonomen landwirtschaftlichen Arbeitsmaschinen zum gleichen Zeitpunkt stellt sicher, dass zunächst die autonome landwirtschaftliche Arbeitsmaschine von dem sicheren Betriebszustand in den normalen Betriebszustand überführt wird, deren Ausfallszeit beim Auftreten einer Unregelmäßigkeit wirtschaftlich am Gravierendsten wäre.

Gemäß einer vorteilhaften Weiterbildung der Erfindung ist vorgesehen, dass ein Datensatz, der die Anweisung zum Überführen der autonomen landwirtschaftlichen Arbeitsmaschine aus dem sicheren Betriebszustand in den normalen Betriebszustand gemeinsam mit der identifizierten Unregelmäßigkeit und den entsprechenden Daten enthält, in der Datenbank hinterlegt wird und zwar sobald die Anweisung erzeugt ist.

Vorzugsweise wird der Datensatz an eine Speichereinheit, die Teil der Steuereinrichtung ist, übermittelt.

Hierdurch kann bei einem wiederholten Auftreten einer Unregelmäßigkeit nach Identifizierung der Unregelmäßigkeit umgehend die in der Datenbank hinterlegte Anweisung durch die Verarbeitungseinrichtung aufgerufen und ausgeführt werden.

Weiterhin ist es möglich, dass die Steuereinrichtung selbst auf die in der Speichereinheit der Steuereinrichtung hinterlegten Datensätze zugreift und die ermittelten Daten mit den Daten in den dort hinterlegten Datensätzen abgleicht. Wird ein passender Datensatz durch die Steuereinrichtung identifiziert, der die von der Steuereinrichtung ermittelten Daten enthält, kann umgehend die ebenfalls hinterlegte Anweisung selbsttätig von der Steuereinrichtung, insbesondere einer Steuereinheit der Steuereinrichtung, ausgeführt werden.

Gemäß einer vorteilhaften Weiterbildung der Erfindung ist vorgesehen, dass die Datenbank und die Verarbeitungseinrichtung gemeinsam ein Verwaltungssystem ausbilden.

Vorzugsweise ist das Verwaltungssystem einer ersten Entität zugeordnet, die unabhängig von zumindest einer zweiten Entität ist, der die autonome landwirtschaftliche Arbeitsmaschine und/oder eine landwirtschaftliche Fläche, auf der die autonome landwirtschaftliche Arbeitsmaschine betrieben wird, zugeordnet ist, wobei eine Nutzung des Verwaltungssystems zur Durchführung der Verfahrensschritte von der ersten Entität bei einer vorliegenden Berechtigung freigeschaltet wird.

Wahlweise kann das Verwaltungssystem demnach der Person (zweite Entität), beispielsweise einem Landwirt oder Lohnunternehmer, dem die autonome landwirtschaftliche Arbeitsmaschine und/oder die landwirtschaftliche Fläche zugeordnet ist, oder einem externen Dienstleister (erste Entität) zugeordnet sein. Die Person (zweite Entität), beispielsweise der Landwirt oder Lohnunternehmer, kann sich die Nutzung des Verwaltungssystems zur Durchführung des erfindungsgemäßen Verfahrens durch die Bezahlung einer Gebühr von dem Dienstleister freischalten lassen. Die Durchführung der Verfahrensschritte betreffend das Identifizieren der Unregelmäßigkeit sowie das Erzeugen und Ausführen der Anweisung zum Überführen der autonomen landwirtschaftlichen Arbeitsmaschine aus dem sicheren Betriebszustand in den normalen Betriebszustand wird demnach als kostenpflichtige externe Dienstleistung angeboten (d.h., als eine As-a-Service-Funktionalität).

Die vorliegende Erfindung wird nachstehend anhand der in den Figuren abgebildeten Ausführungsformen näher beschrieben.

Es zeigen:
- FIG. 1:: eine schematische und exemplarische Darstellung von Einrichtungen zur Durchführung des erfindungsgemäßen Verfahrens; und
- FIG. 2:: ein Diagramm, das schematisch und exemplarisch einen Ablauf an Verfahrensschritten des erfindungsgemäßen Verfahrens wiedergibt.

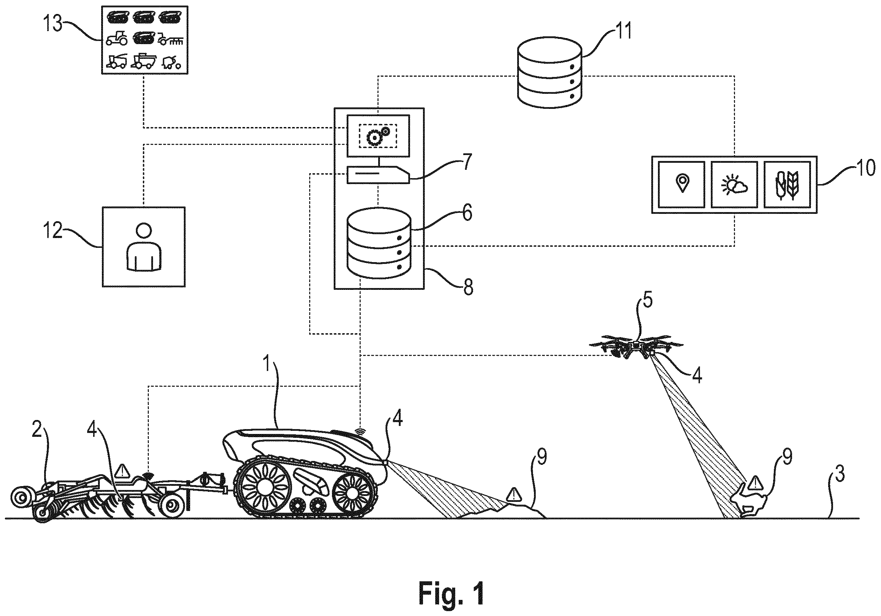

In FIG. 1 ist eine unbemannte bzw. autonome landwirtschaftliche Arbeitsmaschine 1 mit einem an die autonome landwirtschaftliche Arbeitsmaschine 1 adaptierten Arbeitsaggregat 2 in Gestalt eines Grubbers während eines Betriebs auf einer landwirtschaftlichen Fläche 3 dargestellt. Die autonome landwirtschaftliche Arbeitsmaschine 1 führt auf der landwirtschaftlichen Fläche 3 einen spezifischen Arbeitsschritt, hier das Pflügen, autonom aus, d.h. ohne, dass ein Bediener die autonome landwirtschaftliche Arbeitsmaschine 1 während ihres Betriebs aktiv beeinflusst. Auch wenn in dem in FIG. 1 dargestellten Ausführungsbeispiel die autonome landwirtschaftliche Arbeitsmaschine 1 mit adaptiertem Arbeitsaggregat 2 abgebildet ist, ist eine solche Ausgestaltung zur Durchführung des erfindungsgemäßen Verfahrens nicht zwangsläufig erforderlich. Vielmehr kann die autonome landwirtschaftliche Arbeitsmaschine 1 auch ohne ein adaptiertes Arbeitsaggregat 2 auf der landwirtschaftlichen Fläche 3 autonom arbeiten. Ferner sind zu adaptierende Arbeitsaggregate 2 nicht auf das dargestellte Anbaugerät beschränkt. Vielmehr können an der autonomen landwirtschaftlichen Arbeitsmaschine 1 verschiedenste Arbeitsaggregate, wie Anbaugeräte, Vorsatzgeräte oder dergleichen, adaptiert werden, je nachdem welcher Arbeitsschritt von der autonomen landwirtschaftlichen Arbeitsmaschine 1 durchgeführt werden soll. Auch wenn die in FIG. 1 dargestellte landwirtschaftliche Fläche 3 eine zu bearbeitendes Feld wiedergibt, kann diese genauso gut eine Hofstätte darstellen.

Neben dem in FIG. 1 dargestellten adaptierten Arbeitsaggregat 2 umfasst die autonome landwirtschaftliche Arbeitsmaschine 1 diverse - in FIG. 1 nicht dargestellte - Arbeitsaggregate, wie Antriebsmotoren, Getriebe oder dergleichen, die der autonomen landwirtschaftlichen Arbeitsmaschine 1 selbst zuzuordnen sind.

Wesentlich für den Betrieb der autonomen landwirtschaftlichen Arbeitsmaschine 1 ist, dass der Betrieb der autonomen landwirtschaftlichen Arbeitsmaschine 1 auf der landwirtschaftlichen Fläche 3 vollständig ohne Beeinflussung durch eine sich in der Nähe der autonomen landwirtschaftlichen Arbeitsmaschine 1 befindende Person erfolgt. Da allerdings genauso wie bei einem Betrieb einer herkömmlichen bemannten landwirtschaftlichen Arbeitsmaschine Unregelmäßigkeiten im Betrieb auftreten können, auf die entsprechend reagiert werden muss, muss der Betrieb der autonomen landwirtschaftlichen Arbeitsmaschine 1 überwacht werden.

Damit die Überwachung der autonomen landwirtschaftlichen Arbeitsmaschine 1 erfolgen kann, ist eine Sensoreinrichtung vorgesehen, die dazu ausgebildet ist, Daten zu ermitteln, die Betriebsparameter und Umgebungsparameter der autonomen landwirtschaftlichen Arbeitsmaschine 1 repräsentieren. Vorzugsweise umfasst die Sensoreinrichtung eine Vielzahl an Sensoren 4, die wahlweise an der autonomen landwirtschaftlichen Arbeitsmaschine 1, an dem adaptierten Arbeitsaggregat 2 und/oder an einer sich in unmittelbarer Nähe zur autonomen landwirtschaftlichen Arbeitsmaschine 1 befindenden Einrichtung 5 angeordnet sind. In FIG. 1 ist eine solche sich in unmittelbarer Nähe zur autonomen landwirtschaftlichen Arbeitsmaschine 1 befindende Einrichtung 5 als Drohne dargestellt. Als Sensoren 4 kommen alle im Kontext der Landwirtschaft bekannten berührungslos und berührend arbeitenden Sensoren infrage. Weiterhin ist eine - in den FIGs. nicht dargestellte - Steuereinrichtung vorgesehen, die mit der Sensoreinrichtung, insbesondere mit den einzelnen Sensoren 4 der Sensoreinrichtung, zur Übertragung von Daten kommuniziert bzw. verbunden ist. Die Steuereinrichtung umfasst vorzugsweise mindestens eine Steuereinheit, die in der autonomen landwirtschaftlichen Arbeitsmaschine 1, einem adaptierten Arbeitsaggregat 2 und/oder an der sich in unmittelbarer Nähe zur autonomen landwirtschaftlichen Arbeitsmaschine 1 befindenden Einrichtung 5 angeordnet ist. Weiter kann Steuereinrichtung eine Speichereinheit umfassen, die sowohl mit der Sensoreinrichtung, insbesondere mit den einzelnen Sensoren 4 der Sensoreinrichtung, als auch der mindestens einen Steuereinheit der Steuereinrichtung zur Übertragung von Daten kommuniziert bzw. verbunden ist.

Weiterhin ist eine Datenbank 6 vorgesehen, in der die von der Sensoreinrichtung ermittelten Daten, die Betriebsparameter und Umgebungsparameter der autonomen landwirtschaftlichen Arbeitsmaschine 1 repräsentieren, hinterlegt werden können. Die Datenbank 6 kommuniziert bzw. ist ebenfalls sowohl mit der Sensoreinrichtung als auch mit der Steuereinrichtung zur Übertragung von Daten verbunden. Neben der Datenbank 6 ist eine Verarbeitungseinrichtung 7 vorgesehen mittels der Daten im Hinblick auf eine spezifische Zielsetzung hin analysiert werden können. Die Verarbeitungseinrichtung 7 kommuniziert mit der Datenbank 6 bzw. ist mit der Datenbank 6 zur Übertragung von Daten verbunden. Vorzugsweise kommuniziert bzw. ist die Verarbeitungseinrichtung 7 ferner mit der Sensoreinrichtung und/oder der Steuereinrichtung zur Übertragung von Daten verbunden. Die Datenbank 6 und die Verarbeitungseinrichtung 7 sind externe Einrichtungen, die sich nicht in der autonomen landwirtschaftlichen Arbeitsmaschine 1, dem hieran adaptierten Arbeitsaggregat, der sich in unmittelbarer Umgebung zur autonomen landwirtschaftlichen Arbeitsmaschine 1 befindenden Einrichtung 5 und/oder in der Nähe der landwirtschaftlichen Fläche 3 befinden, auf der die autonome landwirtschaftliche Arbeitsmaschine 1 betrieben wird. Die Datenbank 6 und die Verarbeitungseinrichtung 7 bilden gemeinsam ein datenbankbasiertes Verwaltungssystem 8 aus.

Die Datenbank 6 kann als zentrale Datenbank 6 oder aber als dezentrale, also verteilte, Datenbank 6 ausgebildet sein. Ist die Datenbank 6 als dezentrale Datenbank 6 ausgebildet, so ist sie vorzugsweise als Blockchain-Datenbank 6 ausgebildet. Weiterhin ist es möglich, dass die Datenbank 6 als cloudbasierte Datenbank 6 implementiert ist.

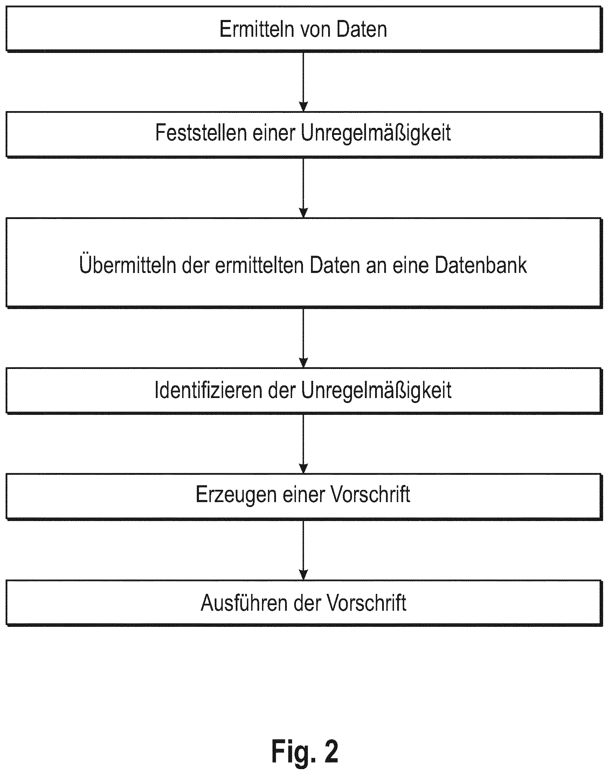

Wie bereits eingangs erwähnt, ist auch für den Betrieb der autonomen landwirtschaftlichen Arbeitsmaschine 1 eine Überwachung erforderlich, so dass auf etwaige während des Betriebs der autonomen landwirtschaftlichen Arbeitsmaschine 1 auftretende Unregelmäßigkeiten, die zu einer betriebskritischen Situation während des Betriebs der autonomen landwirtschaftlichen Arbeitsmaschine 1 führen könnten, entsprechend reagiert werden kann. Anhand der FIGs. 1 und 2 wird im Folgenden das erfindungsgemäße Verfahren zur Überwachung des Betriebs mindestens einer der zuvor beschriebenen autonomen landwirtschaftlichen Arbeitsmaschinen 1 im Detail beschrieben.

Den Ausgangspunkt für das erfindungsgemäße Verfahren bildet die autonome landwirtschaftliche Arbeitsmaschine 1, die sich auf der landwirtschaftlichen Fläche 3 im Betrieb befindet. Während des Betriebs der autonomen landwirtschaftlichen Arbeitsmaschine 1 werden mittels der Sensoreinrichtung Daten ermittelt, die Betriebsparameter und Umgebungsparameter der autonomen landwirtschaftlichen Arbeitsmaschine 1 repräsentieren. Als Umgebungsparameter sind hierbei Parameter anzusehen, die Umgebungscharakteristika in einem gewissen Radius um die autonome landwirtschaftliche Arbeitsmaschine 1 repräsentieren.

Die von der Sensoreinrichtung ermittelten Daten werden an die Steuereinrichtung übermittelt und von der Steuereinrichtung dahingehend verarbeitet, eine Unregelmäßigkeit im Betrieb der autonomen landwirtschaftlichen Arbeitsmaschine 1 festzustellen. Als Unregelmäßigkeit wird im Rahmen der vorliegenden Erfindung ein defektes Arbeitsaggregat der autonomen landwirtschaftlichen Arbeitsmaschine 1, ein defektes an die autonome landwirtschaftliche Arbeitsmaschine 1 adaptiertes Arbeitsaggregat 2 und/oder ein Hindernis 9 in der von der autonomen landwirtschaftlichen Arbeitsmaschine 1 abzufahrenden Route angesehen. Das Hindernis 9 kann ein sich in der Route der autonomen landwirtschaftlichen Arbeitsmaschine 1 befindendes statisches Hindernis 9 und oder ein sich bewegendes bzw. dynamisches Hindernis 9, insbesondere ein statisches oder dynamisches Objekt, Fahrzeug und/oder Lebewesen, sein.

Sofern die Steuereinrichtung eine Unregelmäßigkeit im Betrieb der autonomen landwirtschaftlichen Arbeitsmaschine 1 feststellt, wird die autonome landwirtschaftliche Arbeitsmaschine 1 umgehend in einen sicheren Betriebszustand überführt. Ein sicherer Betriebszustand ist ein Betriebszustand, in dem der Betrieb der autonomen landwirtschaftlichen Arbeitsmaschine 1 unterbrochen ist. Das Überführen der autonomen landwirtschaftlichen Arbeitsmaschine 1 in den sicheren Betriebszustand dient dazu, eine für die autonome landwirtschaftliche Arbeitsmaschine 1 betriebskritische Situation aufgrund der aufgetretenen Unregelmäßigkeit zu vermeiden.

Nahezu zeitgleich mit dem Feststellen der Unregelmäßigkeit werden die zum Zeitpunkt des Feststellens der Unregelmäßigkeit mittels der Sensoreinrichtung ermittelten Daten entweder von der Sensoreinrichtung selbst oder aber von der Steuereinrichtung an die Datenbank 6 übermittelt und dort hinterlegt. Sobald die Daten in der Datenbank 6 hinterlegt sind werden diese weiter an die Verarbeitungseinrichtung 7 weitergeleitet, die basierend auf diesen Daten die während des Betriebs der autonomen landwirtschaftlichen Arbeitsmaschine 1 aufgetretene Unregelmäßigkeit identifiziert. Hierzu werden die zum Zeitpunkt des Feststellens der Unregelmäßigkeit von der Sensoreinrichtung ermittelten Daten durch die Verarbeitungseinrichtung in einer Analyseroutine analysiert bzw. verarbeitet. Die Analyseroutine wendet zur Identifizierung der Unregelmäßigkeit einen Analysealgorithmus an, mittels dem die von der Sensoreinrichtung ermittelten Daten derart verarbeitet werden, dass die Art der Unregelmäßigkeit bestimmt wird. Vorzugsweise werden neben den von der Sensoreinrichtung ermittelten Daten weitere sogenannte Referenzdaten 10 im Analysealgorithmus verwendet. Als Referenzdaten 10 sind Geodaten, insbesondere Daten mittels derer die autonome landwirtschaftliche Arbeitsmaschine 1 während ihres Betriebs lokalisiert werden kann, Wetterdaten und/oder agronomische Daten, vorzugsweise Bodendaten, Bestandsdaten, Ertragsdaten und/oder Flächendaten anzusehen. Die Referenzdaten 10 können ebenfalls in der Datenbank 6 oder aber in einer von der Datenbank 6 unabhängigen Referenzdatenbank 11 hinterlegt sein, die mit der Verarbeitungseinrichtung 7 zur Übertragung von Daten kommuniziert bzw. verbunden ist.

Vorzugsweise ist der Analysealgorithmus ein lernfähiger Analysealgorithmus, also ein Analysealgorithmus, der auf einer künstlichen Intelligenz, insbesondere einem künstlichen neuronalen Netz, basiert. Der lernfähige Analysealgorithmus wird vor der Durchführung einer ersten Identifizierung mittels eines Initialdatensatzes, der mittels manueller Annotation vorgenommene Zuordnungen von Daten betreffend verschiedene Betriebsparameter und Umgebungsparameter von autonomen landwirtschaftlichen Arbeitsmaschinen 1 und Unregelmä-ßigkeiten definiert, trainiert. Die während der Durchführung des erfindungsgemäßen Verfahrens mittels der Sensoreinrichtung ermittelten Daten und die durch die Verarbeitungseinrichtung 7 identifizierten Unregelmäßigkeiten können zum weiteren Trainieren des Analysealgorithmus verwendet werden.

Sobald die Unregelmäßigkeit durch die Verarbeitungseinrichtung 7 in der Analyseroutine identifiziert worden ist, wird von der Verarbeitungseinrichtung 7 eine Anweisung erzeugt, mittels der die autonome landwirtschaftliche Arbeitsmaschine 1 aus dem sicheren Betriebszustand in den normalen Betriebszustand, also einen Betriebszustand, in dem autonome landwirtschaftliche Arbeitsmaschine 1 ihren ordnungsgemäßen Betrieb fortsetzen kann, überführt werden kann. Das Erzeugen der Anweisung erfolgt in Abhängigkeit der identifizierten Unregelmäßigkeit. Eine Anweisung zeichnet sich dadurch aus, dass diese mindestens eine Vorschrift definiert, die von der Verarbeitungseinrichtung 7 ausgeführt wird, so dass die autonome landwirtschaftliche Arbeitsmaschine 1, die sich im sicheren Betriebszustand befindet, ihren normalen, also ordnungsgemäßen geplanten, Betrieb wiederaufnehmen kann.

Abhängig von der identifizierten Unregelmäßigkeit kann die Anweisung eine Vielzahl an Vorschriften umfassen, die von der Verarbeitungseinrichtung 7 ausgelöst werden, sobald die Anweisung von der Verarbeitungseinrichtung 7 ausgeführt wird. So kann die Anweisung eine Vorschrift umfassen, die ein Ansteuern der autonomen landwirtschaftlichen Arbeitsmaschine 1 durch die Verarbeitungseinrichtung 7 zur Fortsetzung des Betriebs definiert. Ein solches Ansteuern durch die Verarbeitungseinrichtung 7 kann mit einem parallelen Übermitteln einer geänderten Route für die autonome landwirtschaftliche Arbeitsmaschine 1 einhergehen. Wird beispielsweise ein statisches Hindernis 9, wie ein großer Stein oder ein tiefes Loch, von der Verarbeitungseinrichtung 7 als Unregelmäßigkeit identifiziert, so wird eine Anweisung mit Vorschriften von der Verarbeitungseinrichtung 7 erzeugt, die die Verarbeitungseinrichtung 7 dazu veranlassen, die autonome landwirtschaftliche Arbeitsmaschine 1 entsprechend einer geänderten Route zur Umgehung des statischen Hindernisses 9 anzusteuern.

Alternativ hierzu die Anweisung eine Vorschrift umfassen, die ein Beauftragen einer Person 12 zum Überführen der autonomen landwirtschaftlich Arbeitsmaschine 1 von dem sicheren Betriebszustand in den normalen Betriebszustand definiert. Wird beispielsweise ein defektes Arbeitsaggregat der autonomen landwirtschaftlichen Arbeitsmaschine 1 oder ein defektes an die autonome Landwirtschaft Arbeitsmaschine 1 adaptiertes Arbeitsaggregat 2 als Unregelmäßigkeit identifiziert, so wird eine Anweisung mit einer Vorschrift von der Verarbeitungseinrichtung 7 erzeugt, die die Verarbeitungseinrichtung 7 dazu veranlasst, eine Person, beispielsweise eine für die Wartung der autonomen landwirtschaftlichen Arbeitsmaschine 1 zuständige Person oder eine sich in der Nähe der landwirtschaftlichen Fläche 3 befindende Person mit Kenntnissen zur autonomen landwirtschaftlichen Arbeitsmaschine 1, zu beauftragen, die die autonome landwirtschaftliche Arbeitsmaschine 1 vor Ort, also auf der landwirtschaftlichen Fläche 3, von dem sicheren Betriebszustand in den normalen Betriebszustand überführt.

Sofern eine Unregelmäßigkeit im Betrieb der autonomen landwirtschaftlichen Arbeitsmaschine 1 aufgetreten ist, die zu einer Unterbrechung des Betriebs der autonomen landwirtschaftlichen Arbeitsmaschine 1 geführt hat, kann es erforderlich sein, die Ausfallzeit der autonomen landwirtschaftlichen Arbeitsmaschine 1 zu kompensieren, um den Arbeitsschritt oder einen Arbeitsablauf mit einer Vielzahl von Arbeitsschritten wie geplant abschließen zu können. Hierzu kann die Anweisung eine weitere Vorschrift umfassen, die ein Beauftragen von mindestens einer weiteren autonomen landwirtschaftlichen Arbeitsmaschine 1 und/oder mindestens einer bemannten landwirtschaftlichen Arbeitsmaschine aus einer zur Verfügung stehenden Fahrzeugflotte 13 zur Unterstützung der autonomen landwirtschaftlichen Arbeitsmaschine 1, in deren Betrieb die Unregelmäßigkeit aufgetreten ist, definiert.

Es kann weiter vorgesehen sein, dass, sobald die Anweisung zum Überführen der autonomen landwirtschaftlichen Arbeitsmaschine 1 aus dem sicheren Betriebszustand in den normalen Betriebszustand von der Verarbeitungsrichtung 7 erzeugt wurde, ein Datensatz in der Datenbank 6 hinterlegt wird, der die Anweisung zum Überführen der autonome landwirtschaftliche Arbeitsmaschine 1 aus dem sicheren Betriebszustand in den normalen Betriebszustand gemeinsam mit der identifizierten Unregelmäßigkeit und den entsprechenden Daten, also den durch die Sensoreinrichtung ermittelten Daten und optional verwendete Referenzdaten 10, enthält. Dieser Datensatz kann weiterhin an die Speichereinheit übermittelt werden, die Teil der Steuereinrichtung ist.

Auch wenn das erfindungsgemäße Verfahren vorstehend zur Überwachung einer autonomen landwirtschaftlichen Arbeitsmaschine 1 beschrieben wurde, kann das Verfahren gleichermaßen zur Überwachung mindestens zweier autonomer landwirtschaftliche Arbeitsmaschinen 1, vorzugsweise einer Vielzahl an autonomen landwirtschaftlichen Arbeitsmaschinen 1, dienen. Sofern mindestens zwei autonome landwirtschaftliche Arbeitsmaschinen 1 überwacht werden, kann das Identifizieren von Unregelmäßigkeiten mittels der Verarbeitungseinrichtung 7 ein Klassifizieren der Unregelmäßigkeiten umfassen. Der Klassifizierung können Aspekte, wie die Schwere der Unregelmäßigkeit, etwaige durch die Störung entstehende Kosten durch einen Betriebsausfall der autonomen landwirtschaftlichen Arbeitsmaschine 1, Witterungsbedingungen oder dergleichen, zugrunde gelegt werden. Wie vorstehend beschrieben wird zu jeder identifizierten Unregelmäßigkeit einer autonomen landwirtschaftlichen Arbeitsmaschine 1 der mindestens zwei autonomen landwirtschaftlichen Arbeitsmaschinen 1 eine Anweisung zum Überführen derselben von dem sicheren Betriebszustand in den normalen Betriebszustand erzeugt. Das Ausführen der Anweisungen zum Überführen der autonomen landwirtschaftlichen Arbeitsmaschinen 1 aus dem sicheren Betriebszustand den normalen Betriebszustand kann dann einer Priorisierung unterlegen, die auf der zuvor beschriebenen Klassifizierung der Unregelmäßigkeiten basiert. So kann bei einem Vorliegen einer Vielzahl an Unregelmäßigkeiten bei einer Vielzahl an autonomen landwirtschaftlichen Arbeitsmaschinen 1 zum gleichen Zeitpunkt zunächst die autonome landwirtschaftliche Arbeitsmaschine 1 von dem sicheren Betriebszustand in den normalen Betriebszustand überführt werden, deren Ausfallszeit beim Auftreten einer Unregelmäßigkeit wirtschaftlich am Gravierendsten ist.

Wie bereits erwähnt, bilden die Datenbank 6 und die Verarbeitungseinrichtung 7 gemeinsam ein datenbankbasiertes Verwaltungssystem 8 aus. Dieses Verwaltungssystem 8 kann einer ersten Entität, beispielsweise einem externen Dienstleister, zugeordnet sein, die unabhängig von einer zweiten Entität, einer Person, beispielsweise einem Landwirt oder Lohnunternehmer, dem die autonome landwirtschaftliche Arbeitsmaschine 1 und/oder die landwirtschaftliche Fläche 3, auf der die autonome landwirtschaftliche Arbeitsmaschine 1 betrieben wird, zugeordnet ist. Eine Nutzung des Verwaltungssystems 8 zur Durchführung der Verfahrensschritte, die mittels der Datenbank 6 und der Verarbeitungseinrichtung 7 durchgeführt werden, kann dabei von der ersten Entität, also dem Dienstleister, bei einer vorliegenden Berechtigung freigeschaltet werden. Insbesondere kann sich die zweite Entität die Nutzung des Verwaltungssystems 8 zur Durchführung des erfindungsgemäßen Verfahrens durch die Bezahlung einer Gebühr von der ersten Entität freischalten lassen. Die Durchführung der Verfahrensschritte betreffend das Identifizieren der Unregelmäßigkeit sowie das Erzeugen und Ausführen der Anweisung zum Überführen der autonomen landwirtschaftlichen Arbeitsmaschine 1 aus dem sicheren Betriebszustand in den normalen Betriebszustand wird demnach als kostenpflichtige externe Dienstleistung angeboten, d.h. als eine As-a-Service-Funktionalität.

Die Kommunikation der einzelnen Einrichtungen, Einheiten, Arbeitsaggregate, Maschinen und Personen 1, 2, 4, 5, 6, 7, 8, 11, 12, 13 miteinander kann wahlweise kabelgebunden und/oder drahtlos erfolgen.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

- 1: autonome landwirtschaftliche Arbeitsmaschine
- 2: Arbeitsaggregat
- 3: Fläche
- 4: Sensor
- 5: Einrichtung
- 6: Datenbank
- 7: Verarbeitungseinrichtung
- 8: Verwaltungssystem
- 9: Hindernis
- 10: Referenzdaten
- 11: Referenzdatenbank
- 12: Person
- 13: Fahrzeugflotte

## Patentansprüche

1. Verfahren zum Überwachen eines Betriebs mindestens einer autonomen landwirtschaftlichen Arbeitsmaschine (1), die folgenden Verfahrensschritte umfassend:
- Mittels einer Sensoreinrichtung, Ermitteln von Daten während des Betriebs der autonomen landwirtschaftlichen Arbeitsmaschine (1), die Betriebsparameter und Umgebungsparameter der autonomen landwirtschaftlichen Arbeitsmaschine (1) repräsentieren;
- Mittels einer Steuereinrichtung, Feststellen einer Unregelmäßigkeit während des Betriebs der autonomen landwirtschaftlichen Arbeitsmaschine (1) basierend auf den ermittelten Daten, wobei die Sensoreinrichtung mit der Steuereinrichtung zur Übertragung von Daten kommuniziert und die autonome landwirtschaftliche Arbeitsmaschine (1) bei dem Feststellen einer Unregelmäßigkeit in einen sicheren Betriebszustand überführt wird, in dem der Betrieb der autonomen landwirtschaftlichen Arbeitsmaschine (1) unterbrochen ist;
**gekennzeichnet durch die Verfahrensschritte:**
- Übermitteln der ermittelten Daten an eine Datenbank (6) und zwar sobald die Unregelmäßigkeit festgestellt wird, wobei die Datenbank (6) mit der Sensoreinrichtung und/oder der Steuereinrichtung zur Übertragung von Daten kommuniziert und die ermittelten Daten in der Datenbank (6) hinterlegt werden;
- Mittels einer Verarbeitungseinrichtung (7), Identifizieren der Unregelmäßigkeit durch ein Verarbeiten der ermittelten Daten in einer Analyseroutine, wobei die Verarbeitungseinrichtung (7) mit der Datenbank (6) zur Übertragung von Daten kommuniziert;
- Mittels der Verarbeitungseinrichtung (7), Erzeugen einer Anweisung zum Überführen der autonomen landwirtschaftlichen Arbeitsmaschine (1) aus dem sicheren Betriebszustand in einen normalen Betriebszustand und zwar in Abhängigkeit der identifizierten Unregelmäßigkeit, wobei der normale Betriebszustand ein Zustand ist, in dem der Betrieb der autonomen landwirtschaftlichen Arbeitsmaschine (1) fortgesetzt wird; und
- Mittels der Verarbeitungseinrichtung (7), Ausführen der Anweisung zum Überführen der autonomen landwirtschaftlichen Arbeitsmaschine (1) aus dem sicheren Betriebszustand in den normalen Betriebszustand.

2. Verfahren nach Anspruch 1, **dadurch gekennzeichnet, dass** die Anweisung zum Überführen der autonomen landwirtschaftlichen Arbeitsmaschine (1) aus dem sicheren Betriebszustand in einen normalen Betriebszustand Folgendes umfasst:
- eine Vorschrift, die ein Ansteuern der autonomen landwirtschaftlichen Arbeitsmaschine (1) durch die Verarbeitungseinrichtung (7) zur Fortsetzung des Betriebs definiert; oder
- eine Vorschrift, die ein Beauftragen einer Person (12) zum Überführen der autonomen landwirtschaftlichen Arbeitsmaschine (1) von dem sicheren Betriebszustand in den normalen Betriebszustand definiert.

3. Verfahren nach Anspruch 2, **dadurch gekennzeichnet, dass** die Anweisung zum Überführen der autonomen landwirtschaftlichen Arbeitsmaschine (1) aus dem sicheren Betriebszustand in einen normalen Betriebszustand Folgendes umfasst:
- eine Vorschrift, die ein Übermitteln einer geänderten Route für die autonome landwirtschaftliche Arbeitsmaschine (1) definiert.

4. Verfahren nach Anspruch 2 oder 3, **dadurch gekennzeichnet, dass** die Anweisung zum Überführen der autonomen landwirtschaftlichen Arbeitsmaschine (1) aus dem sicheren Betriebszustand in einen normalen Betriebszustand Folgendes umfasst:
- eine Vorschrift, die ein Beauftragen von mindestens einer weiteren autonomen landwirtschaftlichen Arbeitsmaschine (1) und/oder mindestens einer bemannten landwirtschaftlichen Arbeitsmaschine aus einer Fahrzeugflotte (13) zur Unterstützung der autonomen landwirtschaftlichen Arbeitsmaschine (1), in deren Betrieb die Unregelmäßigkeit aufgetreten ist, definiert.

5. Verfahren nach einem der Ansprüche 1 bis 4, **dadurch gekennzeichnet, dass** ein defektes Arbeitsaggregat der autonomen landwirtschaftlichen Arbeitsmaschine (1), ein defektes an die autonome landwirtschaftliche Arbeitsmaschine (1) adaptiertes Arbeitsaggregat (2) und/oder ein Hindernis (9) auf einer Route der autonomen landwirtschaftlichen Arbeitsmaschine (1) als Unregelmäßigkeit identifiziert wird.

6. Verfahren nach Anspruch 5, **dadurch gekennzeichnet, dass** als Hindernis (9) in der Route der autonomen landwirtschaftlichen Arbeitsmaschine (1) ein statisches Hindernis (9) und/oder ein sich bewegendes Hindernis (9) identifiziert wird, insbesondere ein Objekt, ein Fahrzeug und/oder ein Lebewesen.

7. Verfahren nach einem der Ansprüche 1 bis 6, **dadurch gekennzeichnet, dass** das die Datenbank (6) als zentrale Datenbank (6) oder als dezentrale Datenbank (6), vorzugsweise als Blockchain-Datenbank (6), ausgebildet ist.

8. Verfahren nach einem der Ansprüche 1 bis 7, **dadurch gekennzeichnet, dass** die Sensoreinrichtung eine Vielzahl an Sensoren (4) umfasst, die an der autonomen landwirtschaftlichen Arbeitsmaschine (1), an einem an die autonome landwirtschaftliche Arbeitsmaschine (1) adaptierten Arbeitsaggregat (2) und/oder an einer sich in unmittelbarer Umgebung zur autonomen landwirtschaftlichen Arbeitsmaschine (1) befindenden und mit dieser zur Übertragung von Daten kommunizierenden Einrichtung (5), insbesondere einer Drohne, angeordnet sind.

9. Verfahren nach einem der Ansprüche 1 bis 8, **dadurch gekennzeichnet, dass** die Steuereinrichtung mindestens eine Steuereinheit umfasst, die in der autonomen landwirtschaftlichen Arbeitsmaschine (1), in einem an die autonome landwirtschaftliche Arbeitsmaschine (1) adaptierten Arbeitsaggregat (2) und/oder in einer sich in unmittelbarer Umgebung zur autonomen landwirtschaftlichen Arbeitsmaschine (1) befindenden und mit dieser zur Übertragung von Daten kommunizierenden Einrichtung (5), insbesondere einer Drohne, angeordnet ist.

10. Verfahren nach einem der Ansprüche 1 bis 9, **dadurch gekennzeichnet, dass** das Identifizieren der Unregelmäßigkeit mittels der Verarbeitungseinrichtung (7) unter Berücksichtigung von Referenzdaten (10) erfolgt.

11. Verfahren nach Anspruch 10, **dadurch gekennzeichnet, dass** die Referenzdaten (10) Geodaten, insbesondere Daten zur Lokalisierung der autonomen landwirtschaftlichen Arbeitsmaschine (1) während des Betriebs, Wetterdaten und/oder agronomische Daten, insbesondere Bodendaten, Bestandsdaten, Ertragsdaten und/oder Flächendaten, sind, wobei die Referenzdaten (10) in der Datenbank (6) und/oder in einer von der Datenbank (6) unabhängigen Referenzdatenbank (11) hinterlegt sind und die Verarbeitungseinrichtung (7) mit der Referenzdatenbank (11) zur Übertragung von Daten kommuniziert.

12. Verfahren nach einem der Ansprüche 1 bis 11, **dadurch gekennzeichnet, dass** mindestens zwei autonome landwirtschaftliche Arbeitsmaschinen (1), vorzugsweise eine Vielzahl an autonomen landwirtschaftlichen Arbeitsmaschinen (1), überwacht werden, wobei das Identifizieren von Unregelmäßigkeiten mittels der Verarbeitungseinrichtung (7) ein Klassifizieren derselben umfasst, wobei das Ausführen von Anweisungen zum Überführen der autonomen landwirtschaftlichen Arbeitsmaschinen (1) aus dem sicheren Betriebszustand in den normalen Betriebszustand einer Priorisierung unterliegt, die auf der Klassifizierung der Unregelmäßigkeiten basiert.

13. Verfahren nach einem der Ansprüche 1 bis 12, **dadurch gekennzeichnet, dass** ein Datensatz, der die Anweisung zum Überführen der autonomen landwirtschaftlichen Arbeitsmaschine (1) aus dem sicheren Betriebszustand in den normalen Betriebszustand gemeinsam mit der identifizierten Unregelmäßigkeit und den entsprechenden Daten enthält, in der Datenbank (6) hinterlegt wird und zwar sobald die Anweisung erzeugt ist, wobei vorzugsweise der Datensatz an eine Speichereinheit, die Teil der Steuereinrichtung ist, übermittelt wird.

14. Verfahren nach einem der Ansprüche 1 bis 13, **dadurch gekennzeichnet, dass** die Datenbank (6) und die Verarbeitungseinrichtung (7) gemeinsam ein Verwaltungssystem (8) ausbilden.

15. Verfahren nach Anspruch 14, **dadurch gekennzeichnet, dass** das Verwaltungssystem (8) einer ersten Entität zugeordnet sind, die unabhängig von zumindest einer zweiten Entität ist, der die autonome landwirtschaftliche Arbeitsmaschine (1) und/oder eine landwirtschaftliche Fläche (3), auf der die autonome landwirtschaftliche Arbeitsmaschine (1) betrieben wird, zugeordnet ist, wobei eine Nutzung des Verwaltungssystems (8) zur Durchführung der Verfahrensschritte von der ersten Entität bei einer vorliegenden Berechtigung freigeschaltet wird.

## Claims

1. A method for monitoring an operation of at least one autonomous agricultural working machine (1), which comprises the following steps of the method:
- by means of a sensor device, detecting data during the operation of the autonomous agricultural working machine (1) which represent operating parameters and environmental parameters of the autonomous agricultural working machine (1);
- by means of a control device, determining an irregularity during the operation of the autonomous agricultural working machine (1) based on the detected data, wherein the sensor device communicates with the control device for the transfer of data and, when an irregularity is determined, the autonomous agricultural working machine (1) is transposed into a safe operating state in which the operation of the autonomous agricultural working machine (1) is interrupted;
**characterized by the method steps of:**
- transmitting the detected data to a database (6) and in fact as soon as the irregularity has been determined, wherein the database (6) communicates with the sensor device and/or the control device for the transfer of data and the detected data are stored in the database (6);
- by means of a processing device (7), identifying the irregularity by processing the detected data in an analysis routine, wherein the processing device (7) communicates with the database (6) in order to transfer data;
- by means of the processing device (7), generating an instruction to transpose the autonomous agricultural working machine (1) from the safe operating state into a normal operating state and in fact as a function of the identified irregularity, wherein the normal operating state is a state in which the operation of the autonomous agricultural working machine (1) is continued; and
- by means of the processing device (7), executing the instruction to transpose the autonomous agricultural working machine (1) from the safe operating state into the normal operating state.

2. The method according to claim 1, **characterized in that** the instruction to transpose the autonomous agricultural working machine (1) from the safe operating state into a normal operating state comprises the following:
- a rule which defines a control of the autonomous agricultural working machine (1) by the processing device (7) to continue the operation; or
- a rule which defines a commissioning of a person (12) to transpose the autonomous agricultural working machine (1) from the safe operating state into the normal operating state.

3. The method according to claim 2, **characterized in that** the instruction to transpose the autonomous agricultural working machine (1) from the safe operating state into a normal operating state comprises the following:
- a rule which defines a communication of a modified route for the autonomous agricultural working machine (1).

4. The method according to claim 2 or claim 3, **characterized in that** the instruction to transpose the autonomous agricultural working machine (1) from the safe operating state into a normal operating state comprises the following:
- a rule which defines a commissioning of at least one further autonomous agricultural working machine (1) and/or at least one manned agricultural working machine from a fleet of vehicles (13) to support the autonomous agricultural working machine (1) during the operation of which the irregularity has occurred.

5. The method according to one of claims 1 to 4, **characterized in that** a defective working assembly of the autonomous agricultural working machine (1), a defective working assembly (2) adapted to the autonomous agricultural working machine (1) and/or an obstacle (9) on a route of the autonomous agricultural working machine (1) is identified as an irregularity.

6. The method according to claim 5, **characterized in that** a static obstacle (9) and/or a moving obstacle (9) is identified as the obstacle (9) in the route of the autonomous agricultural working machine (1), in particular an object, a vehicle and/or a living being.

7. The method according to one of claims 1 to 6, **characterized in that** the database (6) is configured as a central database (6) or as a decentralized database (6), preferably as a blockchain database (6).

8. The method according to one of claims 1 to 7, **characterized in that** the sensor device comprises a plurality of sensors (4) which are disposed on the autonomous agricultural working machine (1), on a working assembly (2) adapted to the autonomous agricultural working machine (1) and/or on a device (5), in particular a drone, located in the immediate environment of the autonomous agricultural working machine (1) and communicating therewith in order to transfer data.

9. The method according to one of claims 1 to 8, **characterized in that** the control device comprises at least one control unit which is disposed in the autonomous agricultural working machine (1), in a working assembly (2) adapted to the autonomous agricultural working machine (1) and/or in a device (5), in particular a drone, located in the immediate environment of the autonomous agricultural working machine (1) and communicating therewith in order to transfer data.

10. The method according to one of claims 1 to 9, **characterized in that** the irregularity is identified by means of the processing device (7) taking reference data (10) into consideration.

11. The method according to claim 10, **characterized in that** the reference data (10) are geodata, in particular data for localizing the autonomous agricultural working machine (1) during the operation, weather data and/or agronomic data, in particular soil data, crop data, yield data and/or area data, wherein the reference data (10) are stored in the database (6) and/or in a reference database (11) which is independent of the database (6) and the processing device (7) communicates with the reference database (11) for the transfer of data.

12. The method according to one of claims 1 to 11, **characterized in that** at least two autonomous agricultural working machines (1), preferably a plurality of autonomous agricultural working machines (1), are monitored, wherein the identification of irregularities by means of the processing device (7) comprises a classification thereof, wherein the execution of instructions to transpose the autonomous agricultural working machines (1) from the safe operating state into the normal operating state is subject to a prioritization which is based on the classification of the irregularities.

13. The method according to one of claims 1 to 12, **characterized in that** a data set, which contains the instruction to transpose the autonomous agricultural working machine (1) from the safe operating state into the normal operating state together with the identified irregularity and the relevant data, is stored in the database (6) and in fact as soon as the instruction is generated, wherein preferably, the data set is transmitted to a storage unit which is part of the control device.

14. The method according to one of claims 1 to 13, **characterized in that** the database (6) and the processing device (7) together form a management system (8).

15. The method according to claim 14, **characterized in that** the management system (8) is associated with a first entity which is independent of at least one second entity with which the autonomous agricultural working machine (1) and/or an agricultural area (3) on which the autonomous agricultural working machine (1) is operated is associated, wherein a use of the management system (8) for carrying out the steps of the method is enabled by the first entity if an authorization is presented.

## Revendications

1. Procédé de surveillance du fonctionnement d'au moins une machine de travail agricole (1) autonome, qui comprend les étapes de procédé suivantes :
- au moyen d'un dispositif capteur, collecte de données au cours du fonctionnement de la machine de travail agricole (1) autonome, qui représentent des paramètres de fonctionnement et des paramètres d'environnement de la machine de travail agricole (1) autonome ;
- au moyen d'un dispositif de commande, détection d'une anomalie au cours du fonctionnement de la machine de travail agricole (1) autonome, sur la base des données collectées, le dispositif capteur communiquant avec le dispositif de commande en vue de la transmission de données, et, en cas de détection d'une anomalie, la machine de travail agricole (1) autonome étant amenée à un état de fonctionnement sûr dans lequel le fonctionnement de la machine de travail agricole (1) autonome est interrompu ;
**caractérisé par** les étapes de procédé suivantes :
- transmission des données collectées à une base de données (6), et cela dès que l'anomalie est détectée, la base de données (6) communiquant avec le dispositif capteur et/ou le dispositif de commande en vue de la transmission de données, et les données collectées étant enregistrées dans la base de données (6) ;
- au moyen d'un dispositif de traitement (7), identification de l'anomalie par traitement des données collectées, dans une routine d'analyse, le dispositif de traitement (7) communiquant avec la base de données (6) en vue de la transmission de données ;
- au moyen du dispositif de traitement (7), génération d'une instruction pour amener la machine de travail agricole (1) autonome de l'état de fonctionnement sûr dans un état de fonctionnement normal, et cela en fonction de l'anomalie identifiée, l'état de fonctionnement normal étant un état dans lequel le fonctionnement de la machine de travail agricole (1) autonome se poursuit ; et
- au moyen du dispositif de traitement (7), exécution de l'instruction pour amener la machine de travail agricole (1) autonome de l'état de fonctionnement sûr dans l'état de fonctionnement normal.

2. Procédé selon la revendication 1, **caractérisé en ce que** l'instruction pour amener la machine de travail agricole (1) autonome de l'état de fonctionnement sûr dans un état de fonctionnement normal comprend les éléments suivants :
- une consigne qui définit une activation de la machine de travail agricole (1) autonome par le dispositif de traitement (7), en vue de la poursuite du fonctionnement ; ou
- une consigne qui définit une tâche pour une personne (12) en vue d'amener la machine de travail agricole (1) autonome de l'état de fonctionnement sûr dans l'état de fonctionnement normal.

3. Procédé selon la revendication 2, **caractérisé en ce que** l'instruction pour amener la machine de travail agricole (1) autonome de l'état de fonctionnement sûr dans un état de fonctionnement normal comprend :
- une consigne qui définit une transmission d'un itinéraire modifié pour la machine de travail agricole (1) autonome.

4. Procédé selon la revendication 2 ou 3, **caractérisé en ce que** l'instruction pour amener la machine de travail agricole (1) autonome de l'état de fonctionnement sûr dans un état de fonctionnement normal comprend :
- une consigne qui définit une mission pour au moins une autre machine de travail agricole (1) autonome et/ou au moins une machine de travail agricole à conducteur d'un parc de véhicules (13), en vue d'assister la machine de travail agricole (1) autonome dont le fonctionnement présente une anomalie.

5. Procédé selon une des revendications 1 à 4, **caractérisé en ce qu'**un organe de travail défectueux de la machine de travail agricole (1) autonome, un organe de travail (2) défectueux adapté à la machine de travail agricole (1) autonome et/ou un obstacle (9) sur un itinéraire de la machine de travail agricole (1) autonome est défini comme anomalie.

6. Procédé selon la revendication 5, **caractérisé en ce qu'**est identifié comme obstacle (9) sur l'itinéraire de la machine de travail agricole (1) autonome, un obstacle (9) statique et/ou un obstacle (9) en mouvement, notamment un objet, un véhicule et/ou un être vivant.

7. Procédé selon une des revendications 1 à 6, **caractérisé en ce que** la base de données (6) est réalisée comme base de données (6) centralisée ou comme base de données (6) décentralisée, de préférence comme base de données (6) à blockchain.

8. Procédé selon une des revendications 1 à 7, **caractérisé en ce que** le dispositif capteur comprend une pluralité de capteurs (4) qui sont disposés sur la machine de travail agricole (1) autonome, sur un organe de travail (2) adapté à la machine de travail agricole (1) autonome et/ou sur un dispositif (5), notamment un drone, se trouvant à proximité immédiate de la machine de travail agricole (1) autonome et communiquant avec celle-ci en vue de la transmission de données.

9. Procédé selon une des revendications 1 à 8, **caractérisé en ce que** le dispositif de commande comprend au moins une unité de commande qui est disposée dans la machine de travail agricole (1) autonome, dans un organe de travail (2) adapté à la machine de travail agricole (1) autonome et/ou dans un dispositif (5), notamment un drone, se trouvant à proximité immédiate de la machine de travail agricole (1) autonome et communiquant avec celle-ci en vue de la transmission de données.

10. Procédé selon une des revendications 1 à 9, **caractérisé en ce que** l'identification de l'anomalie s'effectue au moyen du dispositif de traitement (7), en tenant compte de données de référence (10).

11. Procédé selon la revendication 10, **caractérisé en ce que** les données de référence (10) sont des données géographiques, notamment des données de localisation de la machine de travail agricole (1) autonome pendant le fonctionnement, des données météorologiques et/ou des données agronomiques, notamment des données relatives au sol, des données relatives aux cultures, des données de rendement et/ou des données de surface, les données de référence (10) étant stockées dans la base de données (6) et/ou dans une base de données de référence (11) indépendante de la base de données (6), et le dispositif de traitement (7) communiquant avec la base de données de référence (11) en vue de la transmission de données.

12. Procédé selon une des revendications 1 à 11, **caractérisé en ce qu'**au moins deux machines de travail agricoles (1) autonomes, de préférence une pluralité de machines de travail agricoles (1) autonomes, sont surveillées, l'identification d'anomalies au moyen du dispositif de traitement (7) comprenant une classification de celles-ci, l'exécution d'instructions pour amener la machine de travail agricole (1) autonome de l'état de fonctionnement sûr dans l'état de fonctionnement normal faisant l'objet d'une priorisation qui est basée sur la classification des anomalies.

13. Procédé selon une des revendications 1 à 12, **caractérisé en ce qu'**un ensemble de données, qui contient l'instruction pour amener la machine de travail agricole (1) autonome de l'état de fonctionnement sûr dans l'état de fonctionnement normal, conjointement avec l'anomalie identifiée et les données correspondantes, est enregistré dans la base de données (6), et cela dès que l'instruction est générée, l'ensemble de données étant de préférence transmis à une unité de mémoire qui fait partie du dispositif de commande.

14. Procédé selon une des revendications 1 à 13, **caractérisé en ce que** la base de données (6) et le dispositif de traitement (7) constituent ensemble un système de gestion (8).

15. Procédé selon la revendication 14, **caractérisé en ce que** le système de gestion (8) est associé à une première entité qui est indépendante d'au moins une deuxième entité à laquelle est associée la machine de travail agricole (1) autonome et/ou une surface agricole (3) sur laquelle la machine de travail agricole (1) autonome est en cours de fonctionnement, une utilisation du système de gestion (8) pour l'exécution des étapes de procédé étant validée par la première entité en présence d'une autorisation.
